# NEUE EUROPÄISCHE PATENTSCHRIFT

(11) **EP 1 093 983 B2**
(45) Veröffentlichungstag und Bekanntmachung des Hinweises auf die Entscheidung über den Einspruch: **11.03.2009**
(45) Hinweis auf die Patenterteilung: 24.08.2005
(21) Anmeldenummer: 00119715.1
(22) Anmeldetag: 09.09.2000
(51) Int. Cl.: B60R 25/10

(54) **Kraftfahrzeugalarmanlage und Verfahren zum Betrieb einer solchen**
Vehicle alarm installation and operation method
Système d'alarme pour véhicule et procédé d'opération associé

(30) Priorität: 19.10.1999 DE 19950200
(43) Veröffentlichungstag der Anmeldung: 25.04.2001
(73) Patentinhaber: Bayerische Motoren Werke Aktiengesellschaft, 80809 München (DE)
(72) Erfinder: Luthe, Christoph, 80809 München (DE)

(56) Entgegenhaltungen:
- WO-A-91/05682
- WO-A1-82/01781
- WO-A1-91/05682
- WO-A1-99/37510
- DE-U- 29 900 888
- FR-A- 1 590 920
- JP-A- 63 279 949
- US-A- 3 659 265
- US-A- 4 843 378
- US-A- 4 922 224
- US-A- 4 922 224
- US-A- 5 103 214
- CONZELMANN G.; KIENCHE U.: 'Microelektronik im Fahzeug, Kapitel 8', 1995, SPRINGER-VERLAG BERLIN, HEIDELBERG, NEW YORK, ISBN 3-540-50128-2 Artikel ENGL, WENERTH, Seiten 201 - 203

## Beschreibung

Die Erfindung betrifft eine Kraftfahrzeugalarmanlage gemäß dem Oberbegriff des Anspruchs 1.

Es ist bekannt Alarmanlagen in Kraftfahrzeugen einzusetzen. Üblicherweise umfaßt eine solche Kraftfahrzeugalarmanlage ein elektronisches Steuergerät, eine optische Anzeige, einen Neigungsgeber, eine Notstromsirene und eine umfassende Sensorik zur Erfassung eines unberechtigten Zugangs zu einem Kraftfahrzeug bzw. einer Beschädigung des Kraftfahrzeugs.

Das elektronische Steuergerät betreibt in der Regel in Abhängigkeit von den bei ihm eingehenden Sensorsignalen die Notstromsirene, so daß im Fall eines Alarms ein akustisches Signal ausgegeben wird. Gleichzeitig können die Fahrtrichtungsanzeiger in einem Blinkmodus betätigt werden. Zweifellos ist dabei die akustische Warnung diejenige, welche am meisten Aufmerksamkeit auf sich zieht. Aus diesem Grund ist es von Nachteil, wenn die akustische Alarmgebung ausfällt. Dies kann beispielsweise dann der Fall sein, wenn das Alarmanlagenhorn fehlerhaft ist oder fehlerhaft an das elektrische Steuergerät angeschlossen ist. Natürlich kann auch ein Kabelbruch oder ein Durchtrennen der direkten Kabelverbindung zwischen Notstromsirene und elektrischem Steuergerät zu einer Betriebsunfähigkeit führen.

Aus der US4922224 ist eine Kraftfahrzeugalarmanlage mit einer Sensorik zum Detektieren des Eindringens in ein Kraftfahrzeug bekannt. Eine Steuereinrichtung ist mit der Sensorik und mit einer akustischen Warneinrichtung verbunden, die von der Steuereinrichtung in Abhängigkeit von den Signalen der Sensorik ansteuerbar ist. Im Kraftfahrzeug ist zusätzlich eine akustische Ausgabeeinheit und eine Überprüfungseinrichtung vorgesehen, die bei aktivierter akustischer Warneinrichtung deren Funktionsfähigkeit überprüft und ein entsprechendes Signal an die Steuereinrichtung abgibt. Wird während des Betriebs der akustischen Warneinrichtung ein Tri g-ger-Signal erzeugt, wird zusätzlich die akustische Warneinrichtung in Betrieb genommen. Ein zu hoher elektrischer Stromfluss durch die akustische Warneinrichtung, insbesondere aufgrund einer fehlerhaften Installation oder aufgrund eines Defekts der akustischen Warneinrichtung, führt zu einer Abschaltung des AlarmSignals zum Betrieb der akustischen Warneinrichtung.

Aus der gattungsgemäßen WO-A-8 201 781 ist eine Kraftfahrzeugalarmanlage bekannt, bei der zwei akustische Ausgabeeinheiten vorgesehen sind.

Aus der US-A-4 922 224 ist eine Kraftfahrzeugalarmanlage bekannt, bei der als akustische Warneinrichtungen bzw. als akustische Ausgabeeinheiten ein Stimmen-Synthesizer, eine Sirene und ein Signalhorn vorgesehen sind.

Aufgabe der vorliegenden Erfindung ist es, eine Kraftfahrzeugalarmanlage bereitzustellen, die auch dann eine akustische Warnung ausgibt, wenn die der Alarmanlage direkt zugeordnete akustische Warneinrichtung nicht betrieben werden kann.

Diese Aufgabe wird durch die im Anspruch 1 genannten Merkmale gelöst.

Ein Kerngedanke der vorliegenden Erfindung besteht darin, eine zusätzliche akustische Ausgabeeinheit im Kraftfahrzeug vorzusehen und zu überprüfen, ob bei aktiviertem Alarm die akustische Warneinrichtung funktions- und betriebsfähig ist. Kann die akustische Warneinrichtung - aus welchem Grunde auch immer - nicht betrieben werden, so veranlasst die Steuereinrichtung den Betrieb der zusätzlichen akustischen Ausgabeeinheit.

Bei dieser zusätzlichen Ausgabeeinheit handelt es sich um eine bereits im Fahrzeug vorhandene Fahr-zeughupe, die in der Regel nicht mit der akustischen Warneinrichtung der Alarmanlage identisch ist. Diese Kraftfahrzeughupe soll dann mittelbar oder unmittelbar über die Steuereinrichtung angesprochen werden, so dass eine Alarmanlagennotlauffunktion hinsichtlich der akustischen Warnausgabe gebildet ist.

Gerade in modernen Geräten besitzt die Kraftfahrzeugalarmanlage einen eigenen Datenbus und kann Datentelegramme an andere elektrische Fahrzeugeinheiten übermitteln. Ferner kann eine solche Kraftfahrzeugalarmanlage mit einem Karosseriedatenbus verbunden werden. Ergibt nun eine periodische Überprüfung der Betriebsfähigkeit der akustischen Warneinrichtung eine Fehlfunktion, so setzt die Steuereinrichtung die Karosserieelektronik über den Datenbus davon in Kenntnis, so dass ein akustischer Alarm über die zusätzliche akustische Ausgabeeinheit, insbesondere die Fahrzeughupe, generiert wird.

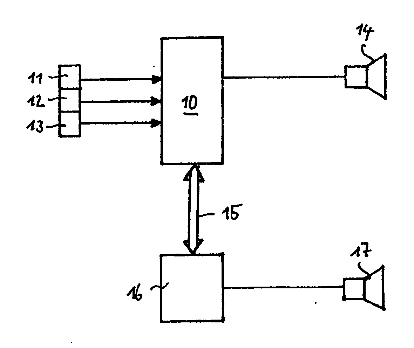

Ein einfaches Ausführungsbeispiel der vorliegenden Erfindung wird mit Bezug auf die einzige beiliegende Zeichnung näher erläutert. Die einzige Zeichnung zeigt eine schematische Schaltskizze einer erfindungsgemäßen Kraftfahrzeugalarmanlage.

Die in der einzigen Figur dargestellte Kraftfahrzeugalarmanlage ist in einem nicht gezeigten Kraftfahrzeug verbaut und umfaßt eine elektrische Steuereinrichtung 10, welche Eingangssignale von verschiedenen Sensoren 11, 12 und 13 erhält. Die Sensoren überwachen in bekannter Weise den Innenraum oder das unbefugte Öffnen des Fahrzeugs sowie die Fahrzeugneigung. Zusätzlich kann auch ein Sensor vorgesehen sein, der ein Wegrollen des Fahrzeugs meldet. Es wird nicht weiter auf die durch die Sensoren 11 bis 13 gebildete Sensorik eingegangen, da diese dem Fachmann im wesentlichen bekannt ist.

Die elektrische Steuereinrichtung 10 ist mit einer direkt zugeordneten akustischen Warneinrichtung 14 verbunden, bei der es sich um eine Notstromsirene handelt. Bei der Auslösung eines Alarms wird von der akustischen Warneinrichtung 14 ein akustisches Warnsignal erzeugt.

Die elektronische Steuereinrichtung 10 besitzt ferner einen (nicht dargestellten) Überprüfungskreis, der periodisch den die akustische Warneinrichtung 14 durchfließenden Strom und die ausgetauschten Datentelegramme überprüft. Damit können die Notstromsirene und die Datenleitung überprüft werden. Durch die periodische Überprüfung kann die Fehlermeldung auch wieder zurückgenommen werden, beispielsweise bei einer wiederfunktionierenden Sirene oder nach einem Austausch einer defekten Sirene. Darüber hinaus erkennt die Steuereinheit eine Manipulation (z.B. Kabeldurchschneiden, Abstecken der Sirene, etc.). Insbesondere kann auch während eines akustischen Alarms sofort auf die Fahrzeughupe umgeschaltet werden.

Im Überprüfungskreis wird vorliegend beim Erfassen von Unregelmäßigkeiten im Stromfluß über den Datenbus 15 eine Information an eine elektrische Karosserieeinheit 16 weitergegeben, welche direkt mit einer Kraftfahrzeughupe 17 verbunden ist. Bei einem entsprechenden Signal über den Datenbus 15 wird über die elektrische Karosserieeinheit 16 die Fahrzeughupe 17 als Ersatz für die akustische Warneinrichtung 14 betätigt.

Insgesamt ist somit eine akustische Warnung bei einem Alarm sichergestellt, auch wenn die der Alarmanlage direkt zugeordnete akustische Warneinrichtung defekt oder funktionsunfähig ist.

## Patentansprüche

1. Kraftfahrzeugalarmanlage mit einer Sensorik zum Detektieren des Eindringens in ein Kraftfahrzeug oder der Beschädigung des Kraftfahrzeugs, einer Steuereinrichtung, die mit der Sensorik verbunden ist, und mit einer mit der Steuereinrichtung verbundenen akustischen Warneinrichtung, die von der Steuereinrichtung in Abhängigkeit von den Signalen der Sensorik ansteuerbar ist, wobei eine zusätzliche akustische Ausgabeeinheit im Kraftfahrzeug vorgesehen ist, und wobei eine Überprüfungseinrichtung vorgesehen ist, die bei aktivierter akustischer Warneinrichtung deren Funktionsfähigkeit überprüft und ein entsprechendes Signal an die Steuereinrichtung abgibt, und
wobei die Steuereinrichtung ausgebildet ist, um einen Betrieb der zusätzlichen akustischen Ausgabeeinheit als Ersatz für die akustische Warneinrichtung dann zu veranlassen, wenn die angesteuerte Warneinrichtung nicht betreibbar ist,
**dadurch gekennzeichnet,**
**dass** es sich bei der zusätzlichen akustischen Ausgabeeinheit um eine normale Fahrzeughupe handelt, und
**dass** die Steuereinrichtung den die akustische Warneinrichtung durchfließenden Strom und die ausgetauschten Datentelegramme periodisch überprüft.

2. Kraftfahrzeugalarmanlage nach Anspruch 1,
**dadurch gekennzeichnet,**
**dass** die Steuereinrichtung über einen Datenbus mit einer im Fahrzeug vorgesehenen Karosserieelektronik in Verbindung steht.

## Claims

1. A motor vehicle alarm system comprising a sensor system for detecting penetration into a motor vehicle or damage to the motor vehicle, a control device, which is connected to the sensor system, and comprising an acoustic warning device which is connected to the control device and can be activated by the control device as a function of the signals of the sensor system, wherein an additional acoustic output unit is provided in the motor vehicle and wherein a checking device is provided which checks the functionality of the acoustic warning device when it is activated and emits a corresponding signal to the control device, and wherein the control device is configured to bring about an operation of the additional acoustic output unit as a replacement for the acoustic warning device if the activated warning device is not operable, **characterised in that** the additional acoustic output unit is a normal vehicle horn, and **in that** the control device periodically checks the current flowing through the acoustic warning device and the exchanged data telegrams.

2. A motor vehicle alarm system according to claim 1, **characterised in that** the control device is connected by means of a data bus to a body electronic system provided in the vehicle.

## Revendications

1. Système d'alarme pour véhicule automobile comprenant un ensemble de capteurs pour détecter l'intrusion dans un véhicule ou la dégradation de celui-ci, un dispositif de commande relié à l'ensemble de capteurs, un dispositif d'avertissement acoustique relié au dispositif de commande pouvant être commandé par ce dernier en fonction des signaux de l'ensemble de capteurs,
dans lequel
- une unité d'émission acoustique supplémentaire est prévue dans le véhicule,
- un dispositif de vérification vérifie le bon fonctionnement du dispositif d'avertissement acoustique si celui-ci est activé et fournit un signal correspondant au dispositif de commande, et
- le dispositif de commande est conçu pour initier le fonctionnement de l'unité d'émission acoustique supplémentaire en remplacement du dispositif d'avertissement acoustique si ce dernier ne fonctionne pas lorsqu'il est activé,
**caractérisé en ce que**
- l'unité d'émission acoustique supplémentaire est un avertisseur normal, et
- le dispositif de commande vérifie périodiquement le courant électrique passant dans le dispositif d'avertissement acoustique et les télégrammes de données échangés.

2. Système d'alarme pour véhicule automobile selon la revendication 1,
**caractérisé en ce que**
le dispositif de commande est en communication par l'intermédiaire d'un bus de données avec une électronique de carrosserie prévue dans le véhicule.
